# EUROPEAN PATENT SPECIFICATION

(11) **EP 3 286 410 B1**
(45) Date of publication and mention of the grant of the patent: **02.06.2021**
(21) Application number: 16717955.5
(22) Date of filing: 22.04.2016
(51) Int. Cl.: F01D 25/12, F01D 9/04, F01D 25/26

(54) **GAS TURBINE ENGINE HAVING A CASING PROVIDED WITH COOLING FINS**
GASTURBINENMOTOR MIT EINEM GEHÄUSE MIT KÜHLRIPPEN
TURBINE À GAZ AYANT UN BOÎTIER COMPRENANT DES AILETTES DE REFROIDISSEMENT

(30) Priority: 24.04.2015 IT FI20150121
(43) Date of publication of application: 28.02.2018
(73) Proprietor: NUOVO PIGNONE TECNOLOGIE SRL, 50127 Florence (IT)
(72) Inventor: LOMBARDI, Luca, 50127 Firenze (IT); MAVURI, Rajesh, Bangalore Karnataka 560066 (IN); REDDY, Vishnu Vardhan, Bangalore Karnataka 560066 (IN)
(74) Representative: BRP Renaud & Partner mbB Rechtsanwälte Patentanwälte Steuerberater
(86) International application number: PCT/EP2016/059095
(87) International publication number: WO 2016/170165

(56) References cited:
- WO-A1-2015/057409
- WO-A2-2011/053513
- DE-A1-102008 024 335
- DE-C- 945 001
- GB-A- 2 378 730
- US-A1- 2006 196 189
- US-A1- 2011 214 431
- US-B1- 6 227 800
- US-B1- 6 340 285

## Description

### FIELD OF THE INVENTION

The present application and the resultant patent relate generally to gas turbine engines. Embodiments disclosed herein concern gas turbine engines for industrial applications, e.g. for mechanical drive or electric power generation.

### BACKGROUND ART

US 2006/196189 A1 discloses a turbine driving an electric generator to produce a direct current to separate water by electrolysis into component gases.

Gas turbine engines are commonly used as prime movers in several industrial and aeronautical applications. Industrial applications include in particular mechanical drive configurations, where the gas turbine engine is used for driving a load, such as a rotating turbomachine, for instance a compressor or compressor train, a pump or other machinery. Other typical industrial applications include power generation, where the gas turbine engine is used to drive an electric generator for producing electric power. Some areas of the gas turbine engine are subject to high thermal loads, due to the hot combustion gases circulating in the turbomachine. This is particularly the case in the area of the power turbine section and the exhaust gas diffuser. Temperature differentials in these areas can generate severe mechanical stresses due to thermal gradients in the machine components.

There is thus a constant need for improvement in the design of the hot parts of the gas turbine engine, aimed at ameliorating the operating conditions of the turbomachine, for instance as far as the thermally induced stresses are concerned. The following documents also disclose solutions according to the prior art: GB2378730 A, US 6340285 B1, US 2011/214431 A1, US 6227800 B1, DE 945001 C and WO 2015/057409 A1.

### SUMMARY OF THE INVENTION

The present invention is defined in the accompanying claims.

The present application and the resultant patent thus provide a gas turbine engine comprising a compressor section, a combustor section and a turbine section. The compressor section is configured for compressing combustion air which is delivered to the combustor section. Fuel is mixed with the compressed air and the air-fuel mixture is ignited in the combustor section to generate high-temperature, compressed combustion gases. The turbine section is configured for receiving the hot pressurized combustion gases and expand the combustion gases to generate mechanical power. The turbine section can comprise a turbine rotor with at least one bladed wheel rotating around a turbine rotation axis. The turbine section can further comprise an exhaust gas diffuser, and a casing having an inner surface and an outer surface. Embodiments disclosed herein are provided with a plurality of cooling fins located on the outer surface of the casing.

In some embodiments, the cooling fins have an annular shape, surrounding the rotation axis of the turbine rotor. The annular shape can contribute to improve air circulation around the casing, in particular air circulation from the bottom towards the upper part of the casing. In other embodiments, cooling fins extending axially, i.e. parallel to the turbine rotation axis can be provided. A combined arrangement of annular and axial cooling fins can also be provided.

According to some embodiments, the cooling fins can be arranged circularly around the at least one rotating bladed wheel of the turbine rotor. The turbine section can comprise at least one shroud encircling the at least one rotating bladed wheel and connected to the casing. The cooling fins can be arranged around the shroud.

Exemplary embodiments of the gas turbine engine disclosed herein comprise a casing including a turbine casing portion and a diffuser casing portion connected to one another at a connection interface or connection region. The cooling fins can be arranged at or near the connection between the turbine casing portion and the diffuser casing portion. A favorable temperature profile can thus be obtained, which can contribute to a reduction of the thermal stresses and deformation. In some embodiments, this can facilitate disassembling of the casing portions.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the scope of the present invention.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 is a block diagram of a turbine system including a gas turbine engine and a load;
Fig.2 is a schematic sectional view of an embodiment of the gas turbine engine of Fig.1; and
Fig.3 is an enlargement of a portion of the turbine section of the gas turbine engine of Fig.2.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

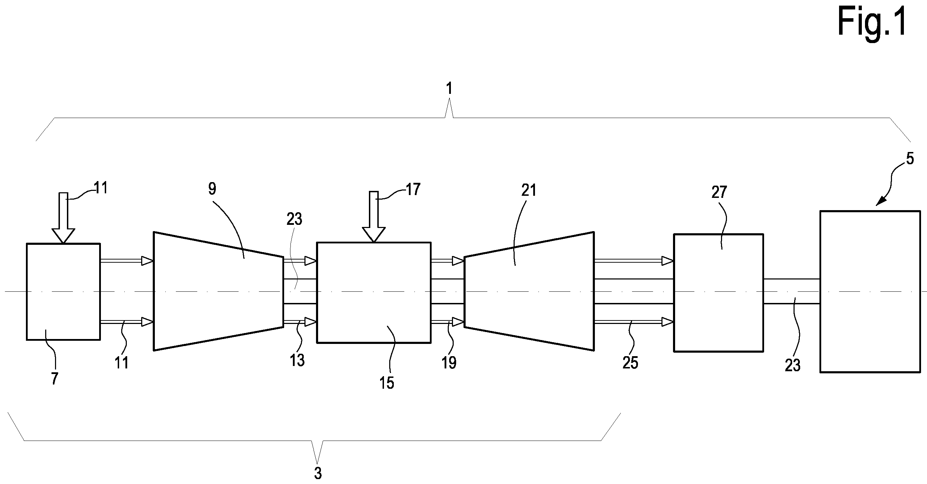

Fig.1 is a block diagram of a gas turbine system 1, including a gas turbine engine 3 and a load 5 driven by the gas turbine engine 3. The load 5 can be a rotating turbomachine, e.g. a centrifugal compressor, an electric generator or any other load driven by mechanical power generated by the gas turbine engine 3.

The gas turbine engine 3 can comprise an air intake section 7 fluidly coupled to a compressor section 9. The compressor section 9 ingests air 11, increases the air pressure and delivers compressed air 13 to a combustor section 15. Fuel 17 is delivered to the combustor section 15 and mixed with the compressed air. The air/fuel mixture is burned to generate a flow of hot, pressurized combustion gases 19. The combustion gases 19 are delivered to a turbine section 21, where the combustion gases expand and generate mechanical power, made available on a shaft 23, drivingly connected to the load 5. Exhaust gases 25 are finally discharged through an exhaust section 27. The shaft 23 can be comprised of two or more shaft portions connected to one another so as to form a continuous shaft or shaft line extending from the compressor section 9 to the load 5. Joints or clutches, as well as gear boxes (not shown) can be arranged along the shaft line.

In the embodiment schematically represented in Fig.1 the gas turbine engine 3 is a single-shaft gas turbine engine, wherein a single shaft extends from the compressor section 9 to the load 5. In other embodiments, the gas turbine engine can be a multi-shaft gas turbine engine, wherein a first shaft drivingly connects a high pressure turbine section to the compressor section 9 and a second shaft drivingly connects a low pressure turbine section to the load 5.

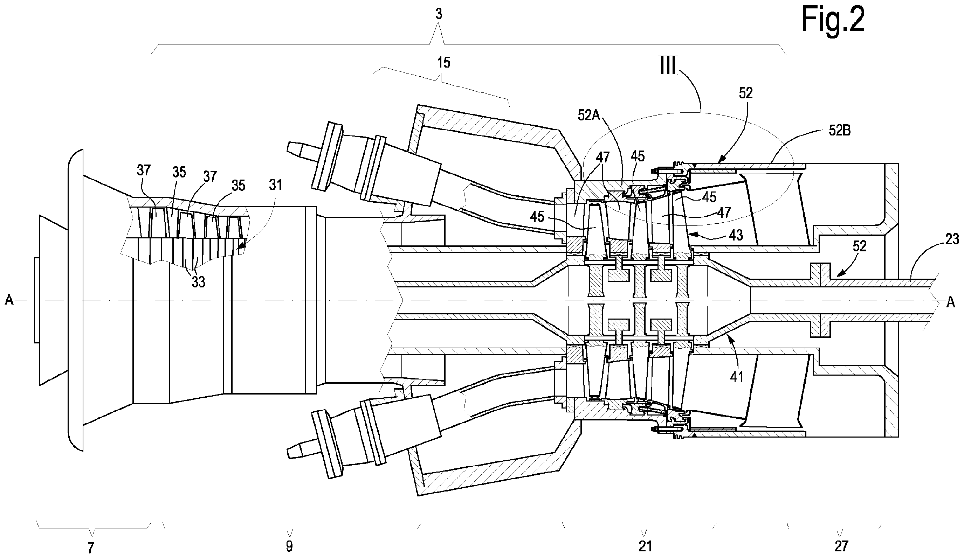

Fig.2, with continuing reference to Fig.1, illustrates a schematic sectional view of the gas turbine engine 3. The compressor section 9 can comprise a compressor rotor 31, which rotates around a gas turbine rotation axis A-A. In the exemplary embodiment of Fig.2, the compressor section 9 comprises an axial compressor, including a compressor rotor 31 comprised of a plurality of compressor wheels 33. Each compressor wheel 33 comprises peripherally arranged rotary compressor blades 35. Stationary compressor blades 37 or vanes are arranged upstream of each set of rotary compressor blades 35, each pair of sequentially arranged sets of stationary and rotary compressor blades forming a compressor stage.

The turbine section 21 can comprise a turbine rotor 41. The turbine rotor 41 can comprise one or more bladed turbine wheels 43, for instance three bladed turbine wheels. In other embodiments a different number of turbine wheels 43 can be provided, mounted on a single rotor or on more mechanically independent rotors of different turbine sections. Each bladed turbine wheel 43 is provided with a set of circumferentially arranged rotary turbine blades 45. Respective sets of circumferentially arranged stationary turbine blades or vanes 47 are arranged upstream of each set of rotary turbine blades 45. One or more of the stationary turbine blades can be angularly adjustable around a respective radial axis, to adjust the operating conditions of the gas turbine engine. Each pair of stationary turbine blades set 47 and respective rotary turbine blades set 45 forms a turbine stage.

In some embodiments, the turbine rotor 41 and the compressor rotor 31 form a common gas turbine rotor. Expansion of hot pressurized combustion gases in the turbine section 21 generates mechanical power available on the gas turbine rotor and is partly used to drive the compressor rotor 31 into rotation, to continue compressing air and thus sustain the combustion process in combustor section 15. The remaining mechanical power generated by the gas expansion in the turbine section, and not used to drive the compressor section 9, is available as useful power to drive the load 5, which can be connected to a mechanical coupling 51 on shaft 23.

In the exemplary embodiment of Figs 1 and 2, the load 5 is coupled to the hot end of the gas turbine engine 3. In other embodiments, not shown, the load 5 can be connected to the opposite, cold end of the gas turbine engine 3, i.e. at the air intake side thereof. In yet further embodiments, not shown, respective loads can be mechanically coupled at both ends of the gas turbine engine 3.

The rotating turbomachine components described so far are usually housed in a housing formed by one or more casings. In Fig.2 the casing of the turbine section is schematically shown at 52.

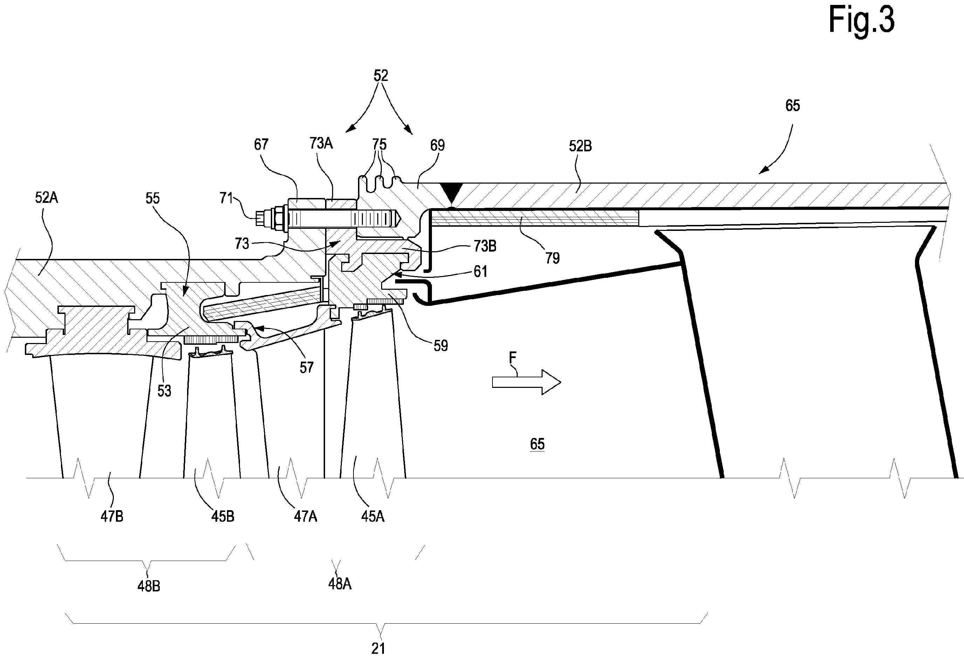

With continuing reference to Fig. 2, Fig.3 illustrates an enlargement of a detail of turbine section 21 and relevant turbine casing 52. In Fig.3 the last set of rotary turbine blades is shown at 45A. The respective stationary turbine blades are shown at 47A. The stationary turbine blades 47A and the rotary turbine blades 45A form the last, i.e. most downstream turbine stage 48A. Upstream of turbine stage 48A, a further set of rotary turbine blades 45B and respective stationary turbine blades 47B form a second last turbine stage 48B. Further upstream turbine stages are not shown in Fig3. The terms "upstream" and "downstream" are referred herein to the main flow of the combustion gases across the turbine section 21, schematically represented by arrow F.

Around the rotary turbine blades 45B a shroud 53 can be provided, which is mounted by means of a mounting arrangement 55 to the casing 52. Adjacent the mounting arrangement 55 a mounting system 57 can be provided, which connects the stationary turbine blades 47A to the casing 52.

Similarly, rotary turbine blades 45A can be surrounded by a respective shroud 59, which encircles the rotary turbine blades 45A and can be mounted on the casing 52 by means of a mounting arrangement 61.

In embodiments disclosed herein each shroud 53, 59 can be formed by shroud segments arranged circumferentially around the rotation axis A-A of the turbine rotor. The shrouds 53, 59 can be provided with a radially inwardly oriented surface coacting with the tips of the respective rotary turbine blades 45B, 45A. The configuration of the shrouds and of the rotary turbine blades is such that the blades can freely rotate around the turbine rotation axis A-A without rubbing against the respective shroud. The clearance between the tips of the rotary turbine blades and the shrouds is sufficiently small to reduce gas leakages, in order to improve the efficiency of the turbine.

Downstream of the last turbine stage 48A, an exhaust gas diffuser 65 receives the exhaust combustion gases after expansion in the turbine stages 48B, 48A. The exhaust gas diffuser 65 is fluidly coupled with the exhaust section 27, wherefrom the exhaust gases can be discharged through an exhaust stack, not shown, or can flow across a waste heat recovery heat exchanger before being discharged in the atmosphere.

According to exemplary embodiments disclosed herein, the casing 52 can be comprised of at least a turbine casing portion 52A and a diffuser casing portion 52B. The turbine casing portion and the diffuser casing portion are connected to one another at a connection region or interface. According to some embodiments, at the connection region the turbine casing portion 52A can be provided with a first connection flange 67 and the diffuser casing portion 52B can be provided with a second connection flange 69. The turbine casing portion 52A and the diffuser casing portion 52B can be connected to one another by means of stud bolts 71, which connect the flanges 67, 69 to one another.

In the embodiment of Fig.3, the first connection flange 67 extends radially outwardly, while the second connection flange 69 extends radially inwardly. The stud bolts 71 can be screwed into threaded blind holes provided in the second connection flange 69 and extend across through holes in the first connection flange 69. Different flange and bolt arrangements can be provided, e.g. two flanges extending radially outwardly, or two flanges extending radially inwardly.

According to some embodiments, the casing 52 further comprises an intermediate annular casing component 73, which can be positioned between the first connection flange 67 and the second connection flange 69. The intermediate annular casing component 73 can be provided with through holes. The stud bolts 71 can extend through the through holes of the intermediate annular casing component 73.

The intermediate annular casing component 73 can be comprised of an annular outwardly projecting flange portion 73A, which is interposed between first connection flange 67 and second connection flanges 69. The intermediate annular casing component 73 can further comprise a substantially cylindrical inner portion 73B, forming a mounting seat for the shroud 59. In some embodiments, the substantially cylindrical inner portion 73B is coaxial to and surrounded, i.e. encircled by the second connection flange 69.

According to embodiments disclosed herein, the turbine casing 52 is provided with cooling fins or ribs, configured and arranged for improving the heat exchange between the turbine casing 52 and air surrounding the turbine section 21. In Fig. 3, cooling fins are shown at 75 and are located at or near the connection interface between the diffuser casing portion 52B and the turbine casing portion 52A.

In some embodiments, the cooling fins 75 are formed on the outer surface of the diffuser casing portion 52B. In embodiments disclosed herein the cooling fins can be located around the second connecting flange 69. The cooling fins 75 are thus located at and around a portion of the turbine casing 52, which has an increased thickness and corresponds to the axial position of the shroud 59 of the last, i.e. most downstream turbine stage 48A.

The shape of the cooling fins 75 can be selected for optimal heat transfer towards the air surrounding the gas turbine engine 3. If the gas turbine engine 3 is housed in an enclosure or package, the surrounding air can be circulated forcedly in and through the enclosure, to improve heat removal by forced convection. If no enclosure is present, air can circulate mainly by natural convection around the turbine casing.

The shape of the cooling fins 75 can be selected such as to improve air circulation around the casing and along the surfaces of the cooling fins 75, for enhanced heat removal from the turbine casing 52.

In some embodiments, the cooling fins 75 have a circular shape and extend around the rotation axis A-A of the gas turbine engine 3, as schematically shown in Fig. 3. In the figure three circular, i.e. annular cooling fins 75 are provided. However, the number, as well as the axial and radial dimension of the cooling fins 75 can be different, depending upon design considerations and constraints. The circular cooling fins 75 can be continuous. In other embodiments, each circular cooling fin can be divided into sections or portions, each extending for less than 380° around the rotation axis A-A. In other embodiments, not shown, the cooling fins can have an axial or substantially axial extension, or else can be arranged according to an inclined direction with respect to the rotation axis A-A. A combination of cooling fins of different shapes can also be used, e.g. axial and annular cooling fins.

Downstream of the cooling fins 75, with respect to the direction of the combustion gas flow F, the exhaust gas diffuser 65 can be provided with one or more thermal insulation shields 79, which reduce the heat exchange between the outer diffuser casing portion 52B and the inner exhaust gas flow F. The cooling fins 75 arranged at least partly upstream of the thermal insulation shields 79 reduce the temperature gradient in radial and axial direction within the casing 52, thus reducing thermal stresses and thermal deformation of the casing 52. This in turn reduces mechanical loads generated by thermal deformations.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims.

## Claims

1. A gas turbine engine (3) comprising:
a compressor section (9) configured for compressing combustion air;
a combustor section (15) configured for receiving a flow of compressed air (11) from the compressor section (9) and a fuel (17) and for burning a fuel-air mixture generating a flow of hot pressurized combustion gases (19);
a turbine section (21) configured for receiving the hot pressurized combustion gases (19) and expanding the combustion gases to generate mechanical power; the turbine section (21) comprising a turbine rotor (41) with at least one bladed wheel (43) rotating around a turbine rotation axis (A-A), an exhaust gas diffuser (65), and a casing (52) having an inner surface and an outer surface;
wherein the casing (52) comprises a turbine casing portion (52A) and a diffuser casing portion (52B) connected to one another, and a plurality of cooling fins (75) located on the outer surface of the casing (52) wherein the cooling fins (75) are arranged at or near a connection between the turbine casing portion (52A) and the diffuser casing portion (52B);
wherein the turbine casing portion (52A) has a first connection flange (67) and the diffuser casing portion (52B) has a second connection flange (69), and wherein the diffuser casing portion (52B) and the turbine casing portion (52A) are connected to one another at the first connection flange and second connection flange; and
**characterized in that** an intermediate annular casing component (73) is arranged between the first connection flange (67) and the second connection flange (69).

2. The gas turbine engine of claim 1, wherein the cooling fins (75) have an annular shape, surrounding the rotation axis (A-A) of the turbine rotor (41).

3. The gas turbine engine of claim 1 or 2, wherein the cooling fins (75) are arranged circularly around the at least one bladed wheel (43).

4. The gas turbine engine of claim 1 or 2 or 3, wherein the turbine section (9) comprises at least one shroud (59) encircling the at least one bladed wheel (43) and connected to the casing (52), and wherein the cooling fins (75) are arranged around the shroud (59).

5. The gas turbine engine of one or more of the preceding claims, wherein the turbine casing portion (52A) and the diffuser casing portion (52B) are connected to one another at a connection region, and wherein the cooling fins (75) are formed on the diffuser casing portion (52B) at or near the connection region.

6. The gas turbine engine of one or more of the preceding claims, wherein the cooling fins (75) are formed around the second connection flange (69).

7. The gas turbine engine of one or more of the preceding claims, wherein the shroud (59) is constrained to and supported by the intermediate annular casing component (73).

8. The gas turbine engine of one or more of the preceding claims, wherein the intermediate annular casing component (73) extends substantially coaxially with the cooling fins (75); said cooling fins surrounding at least a portion (73B) of the intermediate annular casing component (73).

9. The gas turbine engine of one or more of the preceding claims, wherein the exhaust gas diffuser (65) comprises an inner thermal insulation shield (79), located downstream of the cooling fins (75) with respect to the combustion gas flow.

10. The gas turbine engine of claim 9, wherein the inner thermal insulation shield (79) is arranged at an inner surface of the diffuser casing portion (52B).

## Patentansprüche

1. Gasturbinenmotor (3), umfassend:
einen Verdichterabschnitt (9), der zum Verdichten von Verbrennungsluft konfiguriert ist;
einen Brennkammerabschnitt (15), der konfiguriert ist, einen Strom verdichteter Luft (11) aus dem Verdichterabschnitt (9) und einen Brennstoff (17) aufzunehmen und ein Brennstoff-Luft-Gemisch zu verbrennen, das einen Strom heißer, druckbeaufschlagter Verbrennungsgase (19) erzeugt;
einen Turbinenabschnitt (21), der zum Aufnehmen der heißen, druckbeaufschlagten Verbrennungsgase (19) und zum Expandieren der Verbrennungsgase konfiguriert ist, um mechanische Energie zu erzeugen; wobei der Turbinenabschnitt (21) einen Turbinenrotor (41) mit mindestens einem Schaufelrad (43), das sich um eine Turbinendrehachse (A-A) dreht, einen Abgasdiffusor (65) und ein Gehäuse (52) umfasst, das eine Innenoberfläche und eine Außenoberfläche aufweist;
wobei das Gehäuse (52) einen Turbinengehäuseabschnitt (52A) und einen Diffusorgehäuseabschnitt (52B), die miteinander verbunden sind, und eine Vielzahl von Kühlrippen (75) umfasst, die sich an der Außenoberfläche des Gehäuses (52) befinden, wobei die Kühlrippen (75) an oder nahe einer Verbindung zwischen dem Turbinengehäuseabschnitt (52A) und dem Diffusorgehäuseabschnitt (52B) angeordnet sind;
wobei der Turbinengehäuseabschnitt (52A) einen ersten Verbindungsflansch (67) aufweist und der Diffusorgehäuseabschnitt (52B) einen zweiten Verbindungsflansch (69) aufweist und wobei der Diffusorgehäuseabschnitt (52B) und der Turbinengehäuseabschnitt (52A) am ersten Verbindungsflansch und am zweiten Verbindungsflansch miteinander verbunden sind; und
**dadurch gekennzeichnet, dass** zwischen dem ersten Verbindungsflansch (67) und dem zweiten Verbindungsflansch (69) ein ringförmiges Gehäusezwischenbauteil (73) angeordnet ist.

2. Gasturbinenmotor nach Anspruch 1, wobei die Kühlrippen (75) eine Ringform aufweisen, die die Drehachse (A-A) des Turbinenrotors (41) umgibt.

3. Gasturbinenmotor nach Anspruch 1 oder 2, wobei die Kühlrippen (75) kreisförmig um das mindestens eine Schaufelrad (43) angeordnet sind.

4. Gasturbinenmotor nach Anspruch 1 oder 2 oder 3, wobei der Turbinenabschnitt (9) mindestens ein Deckband (59) umfasst, das das mindestens eine Schaufelrad (43) umgibt und mit dem Gehäuse (52) verbunden ist, und wobei die Kühlrippen (75) um das Deckband (59) herum angeordnet sind.

5. Gasturbinenmotor nach einem oder mehreren der vorstehenden Ansprüche, wobei der Turbinengehäuseabschnitt (52A) und der Diffusorgehäuseabschnitt (52B) an einem Verbindungsbereich miteinander verbunden sind und wobei die Kühlrippen (75) am Diffusorgehäuseabschnitt (52B) an oder nahe dem Verbindungsbereich ausgebildet sind.

6. Gasturbinenmotor nach einem oder mehreren der vorstehenden Ansprüche, wobei die Kühlrippen (75) um den zweiten Verbindungsflansch (69) herum ausgebildet sind.

7. Gasturbinenmotor nach einem oder mehreren der vorstehenden Ansprüche, wobei das Deckband (59) durch das ringförmige Zwischengehäusebauteil (73) eingeschränkt ist und durch dieses abgestützt wird.

8. Gasturbinenmotor nach einem oder mehreren der vorstehenden Ansprüche, wobei sich das ringförmige Zwischengehäusebauteil (73) im Wesentlichen koaxial zu den Kühlrippen (75) erstreckt; wobei die Kühlrippen mindestens einen Abschnitt (73B) des ringförmigen Zwischengehäusebauteils (73) umgeben.

9. Gasturbinenmotor nach einem oder mehreren der vorstehenden Ansprüche, wobei der Abgasdiffusor (65) eine innere Wärmeisolierabschirmung (79) umfasst, die in Bezug auf den Verbrennungsgasstrom den Kühlrippen (75) nachgelagert angeordnet ist.

10. Gasturbinenmotor nach Anspruch 9, wobei die innere Wärmeisolierabschirmung (79) an einer Innenoberfläche des Diffusorgehäuseabschnitts (52B) angeordnet ist.

## Revendications

1. Moteur à turbine à gaz (3) comprenant :
une section de compresseur (9) configurée pour comprimer l'air de combustion ;
une section de combustion (15) configurée pour recevoir un flux d'air comprimé (11) provenant de la section de compresseur (9) et un combustible (17) et pour brûler un mélange combustible-air générant un flux de gaz de combustion chauds pressurisés (19) ;
une section de turbine (21) configurée pour recevoir les gaz de combustion pressurisés chauds (19) et étendre les gaz de combustion pour générer une puissance mécanique ; la section de turbine (21) comprenant un rotor de turbine (41) avec au moins une roue à aubes (43) tournant autour d'un axe de rotation de turbine (A-A), un diffuseur de gaz d'échappement (65), et un carter (52) ayant une surface intérieure et une surface extérieure ;
dans lequel le carter (52) comprend une partie de carter de turbine (52A) et une partie de carter de diffuseur (52B) reliées l'une à l'autre, et une pluralité d'ailettes de refroidissement (75) situées sur la surface extérieure du carter (52), dans lequel les ailettes de refroidissement (75) sont disposées au niveau ou à proximité d'une connexion entre la partie de carter de turbine (52A) et la partie de carter du diffuseur (52B) ;
dans lequel la partie de carter de turbine (52A) a une première bride de connexion (67) et la partie de carter de diffuseur (52B) a une seconde bride de connexion (69), et dans lequel la partie de carter de diffuseur (52B) et la partie de carter de turbine (52A) sont connectées l'une à l'autre au niveau de la première bride de connexion et de la seconde bride de connexion ; et
**caractérisé en ce que** un composant du carter annulaire intermédiaire (73) est disposé entre la première bride de connexion (67) et la deuxième bride de connexion (69).

2. Moteur à turbine à gaz selon la revendication 1, dans lequel les ailettes de refroidissement (75) ont une forme annulaire, entourant l'axe de rotation (A-A) du rotor de turbine (41).

3. Moteur à turbine à gaz selon la revendication 1 ou 2, dans lequel les ailettes de refroidissement (75) sont disposées circulairement autour de l'au moins une roue à aubes (43).

4. Moteur à turbine à gaz selon la revendication 1 ou 2 ou 3, dans lequel la section de turbine (9) comprend au moins une enveloppe (59) entourant l'au moins une roue à aubes (43) et reliée au carter (52), et dans lequel les ailettes de refroidissement (75) sont agencées autour de l'enveloppe (59).

5. Moteur à turbine à gaz selon une ou plusieurs des revendications précédentes, dans lequel la partie de carter de turbine (52A) et la partie de carter de diffuseur (52B) sont connectées l'une à l'autre au niveau d'une région de connexion, et dans lequel les ailettes de refroidissement (75) sont formées sur la partie de carter de diffuseur (52B) au niveau ou près de la région de connexion.

6. Moteur à turbine à gaz selon une ou plusieurs des revendications précédentes, dans lequel les ailettes de refroidissement (75) sont formées autour de la deuxième bride de connexion (69).

7. Moteur à turbine à gaz selon une ou plusieurs des revendications précédentes, dans lequel l'enveloppe (59) y est contrainte et supportée par le composant du carter annulaire intermédiaire (73).

8. Moteur à turbine à gaz selon une ou plusieurs des revendications précédentes, dans lequel le composant de carter annulaire intermédiaire (73) s'étend sensiblement coaxialement avec les ailettes de refroidissement (75) ; lesdites ailettes de refroidissement entourant au moins une partie (73B) du composant de carter annulaire intermédiaire (73).

9. Moteur à turbine à gaz selon une ou plusieurs des revendications précédentes, dans lequel le diffuseur de gaz d'échappement (65) comprend un blindage d'isolation thermique interne (79), situé en aval des ailettes de refroidissement (75) par rapport au flux de gaz de combustion.

10. Moteur à turbine à gaz selon la revendication 9, dans lequel le blindage d'isolation thermique interne (79) est disposé au niveau d'une surface interne de la partie de carter du diffuseur (52B).
